# EUROPÄISCHE PATENTANMELDUNG

(11) **EP 2 650 988 A2**
(43) Veröffentlichungstag der Anmeldung: **16.10.2013**
(21) Anmeldenummer: 13163411.5
(22) Anmeldetag: 11.04.2013
(51) Int. Cl.: H02B 1/14

(54) **Berührungsschutzabdeckung für elektrische Anlagen**

(30) Priorität: 14.04.2012 DE 102012103251
(71) Anmelder: Greiner Schaltanlagen GmbH, 67304 Kerzenheim (DE)
(72) Erfinder: Christmann, Marc, 67304 Kerzenheim (DE)
(74) Vertreter: Katscher Habermann Patentanwälte

(57) **Zusammenfassung**

Eine Berührungsschutzabdeckung (1) für elektrische Anlagen, insbesondere für Niedrigspannungs- und Mittelspannungs-Schaltanlagen, weist eine Abdeckung und mindestens zwei an gegenüber liegenden Enden der Abdeckung angeordnete Verriegelungsvorrichtungen auf, wobei jede Verriegelungsvorrichtung eine entgegen einer Rückstellkraft auslenkbare Rastnase (15) aufweist, die sich bei einer Montage der Berührungsschutzabdeckung (1) auf dem Träger (25) selbsttätig in eine mit dem Träger (25) in Eingriff stehende Sperrposition verlagert. Jede Rastnase (15) ist durch eine Öffnung in einer Vorderseite (16) der Berührungsschutzabdeckung (1) hindurch mit dem Werkzeug in die Öffnungsposition verlagerbar. Die Berührungsschutzabdeckung (1) weist eine ebene Frontplatte (2) und einen die Frontplatte (2) seitlich umgebenden Rahmen (5) auf. Der Rahmen (5) besteht aus zwei Seitenzargen (3) und aus zwei Querzargen (4). Die Querzargen (4) weisen schlitzartige Ausnehmungen (10, 11) zur Aufnahme von Endbereichen (12) der Frontplatte (2) und der Seitenzargen (3) auf. Gegenüber liegende Endbereiche (12) der Frontplatte (2) sind jeweils formschlüssig in einer zugeordneten Querzarge (3) festlegbar. Die Querzargen (4) weisen Rastmittel (14) auf, die zur Festlegung der Frontplatte (2) mit einer Ausnehmung (22) in der Frontplatte (2) in Eingriff treten.

## Beschreibung

Die Erfindung betrifft eine Berührungsschutzabdeckung für elektrische Anlagen, insbesondere für Niedrigspannungs-oder Mittelspannungs-Schaltanlagen, mit einer Abdeckung und mit mindestens zwei an gegenüber liegenden Enden der Abdeckung angeordneten Verriegelungsvorrichtungen, die mit einem Werkzeug in eine Öffnungsposition verlagerbar sind und eine Entnahme der Berührungsschutzabdeckung von einem Träger ermöglichen.

Niedrigspannungs- und Mittelspannungs-Schaltanlagen können in einem Schrankgehäuse angeordnet sein. In dem Schrankgehäuse befinden sich üblicherweise im Bereich einer Rückwand mindestens ein Geräteträger zur Montage von elektrischen Leitungen, Komponenten und Schaltelementen. Zudem können Bedienelemente oder Anzeigenelemente vorgesehen sein, die eine Kontrolle und/oder Betätigung der Schaltanlage ermöglichen.

Für die Betriebssicherheit eines derartigen Schaltschranks ist neben der elektrischen Konfiguration und der mechanischen Stabilität auch die elektrische Sicherheit zu berücksichtigen, um das Betriebspersonal während einer Kontrolle oder Betätigung einzelner Komponenten in dem geöffneten Schaltschrank vor einer unabsichtlichen Berührung stromführender Leitungselemente zu schützen.

Aus diesem Grund werden nach Möglichkeit alle stromführenden Leitungselemente, die ihrerseits nicht gesondert isoliert oder gesichert sind, mit isolierenden Berührungsschutzabdeckungen bedeckt.

Die Berührungsschutzabdeckungen sollen rasch und ohne größeren Aufwand auf einen in dem Schaltschrank angeordneten Träger montiert und wieder demontiert werden können. Zu diesem Zweck sind die Berührungsschutzabdeckungen regelmäßig lösbar an dem Träger befestigbar, um beispielsweise zu Wartungs- oder Kontrollvorgängen abgenommen werden zu können.

Aus Sicherheitsgründen wird dabei üblicherweise gefordert, dass die Berührungsschutzabdeckung nur mit Hilfe eines geeigneten Werkzeugs von dem Träger gelöst werden kann. Die hierfür verwendeten Verriegelungsvorrichtungen sollen einerseits eine einfache Montage und Demontage der Berührungsschutzabdeckung ermöglichen, andererseits eine Abnahme der Berührungsschutzabdeckung ohne geeignetes Werkzeug grundsätzlich verhindern.

Zu diesem Zweck ist es beispielsweise aus DE 44 12 353 C2 bekannt, eine Berührungsschutzabdeckung mit jeweils in den Ecken befindlichen Schnellverschlussschrauben an einem Träger festzulegen. Die Schnellverschlussschrauben sind dabei die Verriegelungsvorrichtungen für die Berührungsschutzabdeckung. Durch eine 90 Grad-Drehung der Schnellverschlussschrauben, die nur mit Hilfe eines geeigneten Werkzeugs, wie beispielsweise eines Schraubendrehers, vorgenommen werden kann, lassen sich die Schnellverschlussschrauben in eine Sperrposition verdrehen, in der eine seitlich vorspringende Ausformung der Schnellverschlussschrauben in Eingriff mit einer daran angepassten Ausformung oder Ausnehmung des Trägers tritt.

Derartige in der Praxis häufig verwendete Bohrungsschutzabdeckungen müssen allerdings vergleichsweise aufwendig hergestellt und an dem Träger montiert werden. Zur Festlegung der Berührungsschutzabdeckung an dem Träger müssen die einzelnen Schnellverschlussschrauben jeweils mit dem geeigneten Werkzeug aus einer Öffnungsposition in die Sperrposition verlagert werden. Der hierfür erforderliche Zeitaufwand ist insbesondere bei einer Montage einer größeren Anzahl von Berührungsschutzabdeckungen in einem Schaltschrank beachtlich.

Zudem lassen sich die aus der Praxis bekannten Berührungsschutzabdeckungen nur mit einem verhältnismäßig großen Aufwand herstellen. Eine nachträgliche Anpassung der Berührungsschutzabdeckung an die oftmals individuelle Anordnung der einzelnen Komponenten, bzw. der durch die Berührungsschutzabdeckung zugänglichen Anzeige- und Betätigungselemente ist oftmals nur mit einem erheblichen Aufwand möglich.

Es wird deshalb als eine Aufgabe der vorliegenden Erfindung angesehen, eine Berührungsschutzabdeckung der eingangs genannten Gattung so auszugestalten, dass die Montage und auch die Herstellung der Berührungsschutzabdeckung möglichst einfach und kostengünstig ist.

Diese Aufgabe wird erfindungsgemäß dadurch gelöst, dass jede Verriegelungsvorrichtung eine entgegen einer Rückstellkraft auslenkbare Rastnase aufweist, die sich bei einer Montage der Berührungsschutzabdeckung auf dem Träger selbsttätig in eine mit dem Träger in Eingriff stehende Sperrposition verlagert. Für die Montage der Berührungsschutzabdeckung ist demzufolge kein gesondertes Werkzeug erforderlich. Die Berührungsschutzabdeckung muss lediglich in die vorgesehene Position an dem Träger herangeführt werden. Während der Annäherung der Berührungsschutzabdeckung an den Träger werden die Rastnasen entgegen einer Rückstellkraft seitlich ausgelenkt. Sobald die Berührungsschutzabdeckung die an dem Träger vorgegebene Endposition erreicht, können die Rastnasen durch die Rückstellkraft wieder in eine vorgegebene Ausgangsposition bzw. in die Sperrposition zurückschnappen, in der sie mit dem Träger in Eingriff stehen und die Berührungsschutzabdeckung mit dem Träger verriegeln.

Die Rastnasen können beispielsweise als Schnappriegel ausgebildet sein, die eine daran angepasste Ausnehmung in dem Träger hintergreifen. Die Rastnasen können einstückig mit einem Korpus der Berührungsschutzabdeckung ausgebildet sein. Es ist ebenfalls denkbar, dass die Rastnasen gesondert hergestellt und unlösbar, bzw. nur mit einem geeigneten Werkzeug lösbar mit dem Korpus der Berührungsschutzabdeckung verbunden werden.

Gemäß einer vorteilhaften Ausgestaltung des Erfindungsgedankens ist vorgesehen, dass jede Rastnase eine in einem Winkel zur Vorderseite ausgerichtete Montagefläche aufweist, die bei der Montage der Berührungsschutzabdeckung an einem Rand an einer Aussparung in dem Träger entlang gleitet und die Rastnase seitlich aus der Sperrposition auslenkt. Die Ausrichtung der Montagefläche relativ zu der Vorderseite der Berührungsschutzabdeckung, bzw. relativ zu einer üblicherweise senkrecht dazu ausgerichteten Montagerichtung, in der die Berührungsschutzabdeckung an den Träger herangeführt wird, soll einerseits ein möglichst ungehindertes Entlanggleiten der Rastnase an dem Rand der Aussparung während der Montage ermöglichen und gleichzeitig einen ausreichend großen Verlagerungsweg gewährleisten, so dass sich die Rastnase in ihrer Sperrposition nicht mehr unbeabsichtigt von dem Eingriff mit dem Träger lösen kann. Erfahrungsgemäß ist ein Winkel zwischen 45 Grad und etwa 80 Grad relativ zu der Vorderseite der Berührungsschutzabdeckung für die Montagefläche geeignet.

Um eine möglichst einfache Demontage, bzw. Abnahme der Berührungsschutzabdeckung von dem Träger zu ermöglichen, ist es vorgesehen, dass die Rastnase eine schräg von der Öffnung in der Vorderseite der Berührungsabdeckung verlaufende Betätigungsfläche aufweist, die einen Anschlag für das durch die Öffnung in der Vorderseite zur Rastnase eingeführte Werkzeug bildet und eine seitliche Verlagerung der Rastnase durch das Werkzeug ermöglicht. Die Betätigungsfläche weist mindestens einen gegenläufigen Verlauf relativ zur Montagefläche auf und kann beispielsweise nahezu rechtwinklig von der Montagefläche abstehen.

Die Öffnung in der Vorderseite der Berührungsschutzabdeckung muss relativ zu der Rastnase, bzw. zu der Betätigungsfläche so angeordnet sein, dass mit einem geeigneten Werkzeug, wie beispielsweise mit einem Schraubendreher ein Zugriff von außen durch die Öffnung hindurch auf die Betätigungsfläche der Rastnase möglich ist. Die Neigung der Betätigungsfläche der Rastnase verläuft zweckmäßigerweise derart, dass bei einem Einführen eines Schraubendrehers ein vorderes Ende des Schraubendrehers auf die Betätigungsfläche drückt und die Betätigungsfläche zusammen mit der Rastnase verlagert. Mit zunehmendem Eindringen des Schraubendrehers wird die Rastnase immer weiter aus ihrer Sperrposition in eine Öffnungsposition verlagert, so dass der Eingriff der Rastnase mit dem Träger gelöst wird und die Berührungsschutzabdeckung von dem Träger abgenommen werden kann.

Im Hinblick auf eine möglichst große Betriebssicherheit ist vorgesehen, dass an allen vier Ecken bzw. in jedem Eckbereich der Berührungsschutzabdeckung jeweils eine Rastnase angeordnet ist, mit der die betreffende Ecke der Berührungsschutzabdeckung an dem Träger festgelegt werden kann.

Um eine möglichst kostengünstige Herstellung der Berührungsschutzabdeckung und eine einfache Anpassung an unterschiedliche Konfigurationen der Schaltschränke zu ermöglichen, ist vorgesehen, dass die Berührungsschutzabdeckung eine ebene Frontplatte und einen die Frontplatte seitlich umgebenden Rahmen aufweist. Eine ebene Frontplatte lässt sich in einfacher Weise aus einem plattenförmigen Ausgangsmaterial wie beispielsweise Kunststoff herstellen, wobei gängige Stanzverfahren oder Schneideverfahren angewandt werden können. Eine anschließende Verformung der Frontplatte ist nicht erforderlich. Die Frontplatte muss lediglich mit dem umgebenden Rahmen verbunden werden.

Ein besonders kostengünstig herstellbarer Rahmen besteht aus zwei Seitenzargen und aus zwei Querzargen. Die Seitenzargen können ebenso wie die Querzargen jeweils eine identische Formgebung aufweisen. Für die Herstellung der Berührungsschutzabdeckung sind demzufolge lediglich drei unterschiedliche Bauteile erforderlich, nämlich die Frontplatte, die Seitenzargen und die Querzargen.

Die Seitenzargen können ein die Frontplatte seitlich umgreifendes Profil aufweisen. Dadurch wird die Frontplatte längs ihrer Seitenkanten formschlüssig in den Seitenzargen aufgenommen und gelagert.

Gemäß einer besonders vorteilhaften Ausgestaltung des Erfindungsgedankens ist vorgesehen, dass die Querzargen schlitzartige Ausnehmungen zur Aufnahme von Endbereichen der Seitenzargen und der Frontplatte aufweisen. Die Berührungsschutzabdeckung kann in diesem Fall sehr einfach und ohne zusätzliches Werkzeug hergestellt werden. Zunächst wird jeweils ein Ende der Frontplatte und der damit verbundenen beiden Seitenzargen in eine erste Querzarge eingeführt. Anschließend werden die gegenüber liegenden Endbereiche der Frontplatte und der beiden Seitenzargen in eine zweite Querzarge eingeführt. Die Querzargen müssen lediglich an den Endbereichen der Seitenzargen und/oder der Frontplatte festgelegt werden.

Einer vorteilhaften Ausgestaltung des Erfindungsgedankens folgend ist vorgesehen, dass gegenüberliegende Endbereiche der Frontplatte jeweils formschlüssig in einer zugeordneten Querzarge festlegbar sind. Zu diesem Zweck können die Querzargen Rastmittel aufweisen, die zur Festlegung der Frontplatte mit einer Ausnehmung in der Frontplatte in Eingriff treten. Es ist ebenfalls denkbar, dass die Querzargen und die Frontplatte jeweils Aussparungen aufweisen, die bei einem Einführen der Endbereiche der Frontplatte in die Querzargen in Deckung gebracht werden können. Durch die Einführung eines Verriegelungsstifts, der sich über die in Deckung gebrachten Aussparungen in den Querzargen und in der Frontplatte erstreckt, kann die Frontplatte an den beiden Querzargen festgelegt werden. Eine gesonderte Festlegung der Seitenzargen ist in diesem Fall nicht mehr erforderlich, da die Seitenzargen durch deren Anordnung in schlitzartigen Ausnehmungen der Querzargen ausreichend festgelegt und gesichert sind.

Es ist natürlich möglich, die aus einer Frontplatte, aus zwei Seitenzargen und aus zwei Querzargen hergestellte Berührungsschutzabdeckung mit konventionellen Verriegelungseinrichtungen wie beispielsweise mit Schnellverschlussschrauben auszustatten und auf die Ausbildung von Rastnasen zu verzichten. Auf diese Weise können die sehr einfach und kostengünstig herstellbaren Berührungsschutzabdeckungen an Trägern bzw. in Schaltschränken gelagert werden, in denen bislang die konventionellen Verriegelungseinrichtungen verwendet wurden und entsprechende Lager oder Befestigungsbereiche vorgesehen sind. Das kostengünstige Zusammenstecken der einzelnen Bauteile der Berührungsschutzabdeckung und die Möglichkeit, die Aussparungen in der vollständig ebenen Frontplatte besonders einfach anpassen zu können, ist auch bei einer derartigen Ausgestaltung des Erfindungsgedankens gegeben.

Nachfolgend wird ein Ausführungsbeispiel des Erfindungsgedankens näher erläutert, das in der Zeichnung dargestellt ist. Es zeigt:
Figur 1 eine perspektivische Ansicht einer beispielhaften Berührungsschutzabdeckung,
Figur 2 eine Ansicht der in Figur 1 dargestellten Berührungsschutzabdeckung in auseinander gezogener Darstellung,
Figur 3 eine Schnittansicht durch eine Querzarge der Berührungsschutzabdeckung längs der Linie III-III in Figur 2,
Figur 4 eine Seitenansicht des in Figur 3 dargestellten Bereichs der Querzarge, und
Figur 5 eine Schnittansicht der Querzarge gemäß den Figuren 3 und 4, wobei zur Veranschaulichung ein in der Querzarge festgelegter Endbereich einer Frontplatte, ein Anschlagselement eines Trägers und ein eine Rastnase seitlich verlagerndes Werkzeug dargestellt sind.

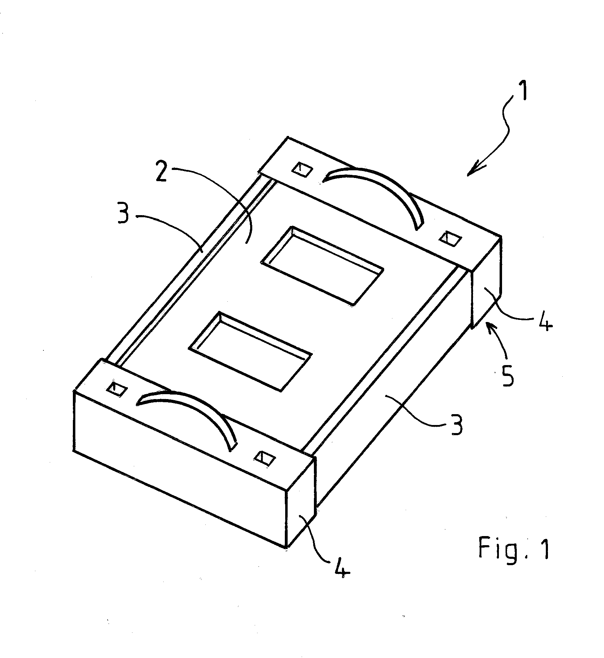

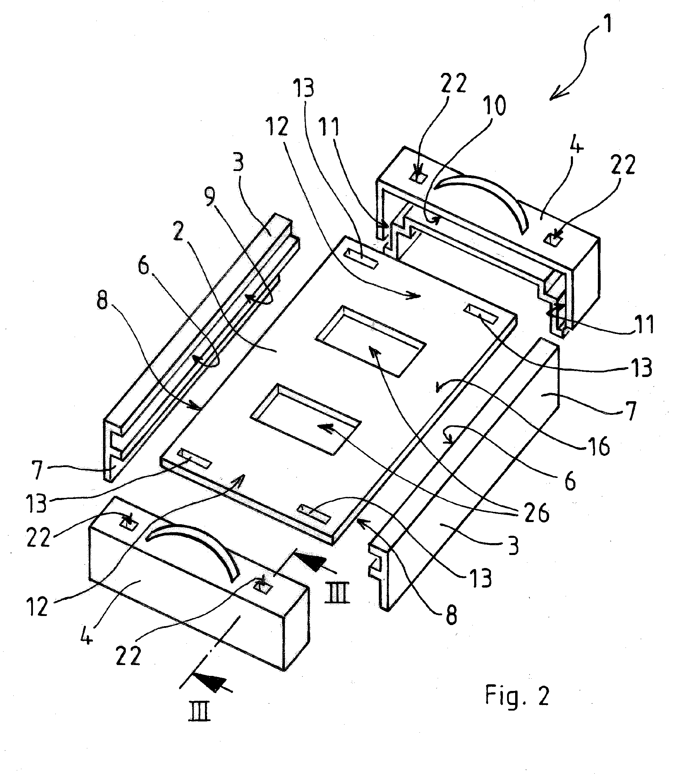

Eine in den Figuren 1 und 2 beispielhaft dargestellte Berührungsschutzabdeckung 1 weist eine Frontplatte 2, zwei Seitenzargen 3 und zwei Querzargen 4 auf. Die beiden Seitenzargen 3 und die beiden Querzargen 4 bilden einen Rahmen 5, der die Frontplatte 2 seitlich umgibt.

Die beiden Seitenzargen 3 weisen jeweils ein C-förmiges Befestigungsprofil 6 auf, das an einem in den Figuren oben dargestellten Ende einer Seitenwand 7 der Seitenzargen 3 ausgebildet ist. Eine Seitenkante 8 der Frontplatte 2 wird in einem fertig montierten Zustand der Berührungsschutzabdeckung 1 in einer nutförmigen Ausdehnung 9 in dem Befestigungsprofil 6 der Seitenzargen 3 aufgenommen und festgelegt.

Die beiden Querzargen 4 weisen jeweils schlitzförmige Ausnehmungen 10 und 11 auf. Ein Endbereich 12 der Frontplatte 2 kann in die schlitzförmige Ausnehmung 10 der zugeordneten Querzarge 4 eingeführt und darin festgelegt werden. Die beiden seitlich an der Frontplatte 2 angeordneten Seitenzargen 3 sind gleichzeitig in der jeweils zugeordneten schlitzförmigen Ausnehmung 11 in der Querzarge 4 festgelegt.

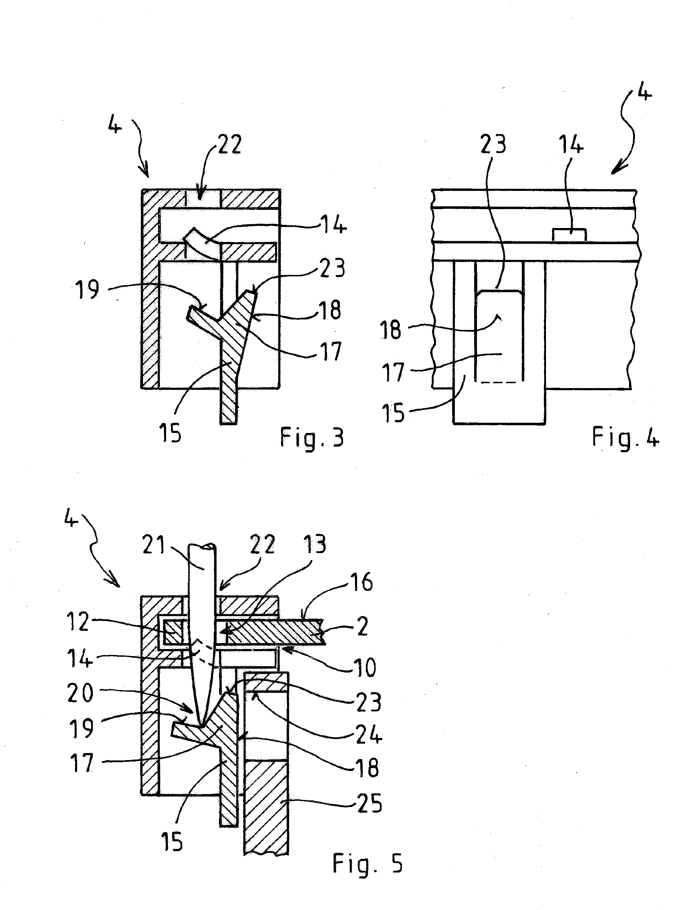

Die Frontplatte 2 weist in den gegenüber liegenden Endbereichen 12 jeweils schlitzförmige Aussparungen 13 auf. In den Figuren 3 bis 5 dargestellte, in Richtung der Frontplatte 2 vorspringende Rastzungen 14 treten mit den schlitzförmigen Aussparungen 13 in Eingriff, sobald die Endbereiche 12 der Frontplatte 2 vollständig in die zugeordnete schlitzförmige Ausnehmung 10 der jeweiligen Querzarge 4 eingeführt wurden und legen dadurch die Querzarge zuverlässig an dem Endbereich 12 der Frontplatte 2 fest. Zusätzliche Befestigungsmittel oder ein Verkleben oder Verfügen der Frontplatte 2 mit den beiden Querzargen 4 oder den beiden Querzargen 3 ist nicht erforderlich.

In den Figuren 3 und 5 sind jeweils Schnittansichten eines Bereichs in der Querzarge 4 dargestellt. In Figur 4 ist eine Seitenansicht dieses Bereichs der Querzarge 4 abgebildet. In diesem Bereich ist jeweils eine Rastnase 15 einstückig an der Querzarge 4 ausgebildet, die sich quer zu der Frontplatte 2, bzw. quer zu einer Vorderseite 16 der Berührungsschutzabdeckung 1 erstreckt. Die Rastnase 15 weist einen seitlich verlagerbaren Rastabschnitt 17 auf. Der Rastabschnitt 17 weist eine schräg in einem Winkel zu der Vorderseite 16, bzw. zu der Frontplatte 2 verlaufende Montagefläche 18 und eine auf einer der Montagefläche 18 gegenüberliegenden Seite angeordnete Betätigungsfläche 19 auf, die näherungsweise senkrecht von der Montagefläche 18 absteht.

In Figur 5 ist exemplarisch dargestellt, dass der Endbereich 12 der Frontplatte 2 in die schlitzförmige Ausnehmung 10 eingeführt und dort von der Rastzunge 14 festgelegt ist. Ein Ende 20 eines Schraubendrehers 21 dringt durch eine Ausnehmung 22 in der Querzarge 4 und die darunter deckungsgleich angeordnete schlitzförmige Aussparung 13 der Frontplatte 2 hindurch und liegt an der Betätigungsfläche 19 des Rastabschnitts 17 der Rastnase 15 an. Mit zunehmender Eindringtiefe des Schraubendrehers 21 gleitet dessen Ende 20 an der schräg geneigten Betätigungsfläche 19 entlang und verlagert den Rastabschnitt 17 zusammen mit einem Anschlag 23 der Rastnase 15 so weit zur Seite hin, dass der Anschlag 23 nicht mehr mit einer Widerlagerfläche 24 eines nicht näher dargestellten Trägers 25 in Eingriff ist und die Rastnase 15 von dem Träger 25 entfernt werden kann.

Wenn sukzessive alle vier Rastnasen 15 von dem Träger 25 gelöst werden, kann die Berührungsschutzabdeckung von dem Träger 25 abgenommen werden. Es ist ebenso denkbar, dass lediglich die zwei Rastnasen 15 der vorzugsweise oben befindlichen Querzarge 4 mit dem Schraubendreher 21 von dem Träger 25 gelöst werden, so dass die Berührungsschutzabdeckung 1 nach vorne verschwenkt werden kann.

Die Frontplatte 2 weist mehrere Aussparungen 26 auf, die an die Abmessungen und Anordnungen von Anzeigeeinrichtungen oder Betätigungseinrichtungen angepasst sind, die in einem nicht dargestellte Schaltschrank hinter der Berührungsschutzabdeckung 1 angeordnet sind und von der Berührungsschutzabdeckung 1 freigelassen werden müssen, um einen Sichtkontakt oder eine Betätigung der betreffenden Komponenten zu ermöglichen.

Die Frontplatte 2 ist ebenso wie die Seitenzargen 3 und die Querzargen 4 aus einem geeigneten isolierenden Kunststoffmaterial hergestellt.

## Patentansprüche

1. Berührungsschutzabdeckung (1) für elektrische Anlagen, insbesondere für Niedrigspannungs- und Mittelspannungs-Schaltanlagen, mit einer Abdeckung und mit mindestens zwei an gegenüber liegenden Enden der Abdeckung angeordneten Verriegelungsvorrichtungen, die mit einem Werkzeug in eine Öffnungsposition verlagerbar sind und eine Entnahme der Berührungsschutzabdeckung (1) von einem Träger (25) ermöglichen, **dadurch gekennzeichnet, dass** jede Verriegelungsvorrichtung eine entgegen einer Rückstellkraft auslenkbare Rastnase (15) aufweist, die sich bei einer Montage der Berührungsschutzabdeckung (1) auf dem Träger (25) selbsttätig in eine mit dem Träger (25) in Eingriff stehende Sperrposition verlagert.

2. Berührungsschutzabdeckung (1) nach Anspruch 1, **dadurch gekennzeichnet, dass** jede Rastnase (15) durch eine Öffnung in einer Vorderseite (16) der Berührungsschutzabdeckung (1) hindurch mit dem Werkzeug in die Öffnungsposition verlagerbar ist.

3. Berührungsschutzabdeckung (1) nach Anspruch 1 oder Anspruch 2, **dadurch gekennzeichnet, dass** jede Rastnase (15) eine in einem Winkel zur Vorderseite (16) ausgerichteten Montagefläche (18) aufweist, die bei der Montage der Berührungsschutzabdeckung (1) an einem Rand einer Aussparung in dem Träger (25) entlang gleitet und die Rastnase (15) seitlich aus der Sperrposition auslenkt.

4. Berührungsschutzabdeckung (1) nach einem der vorangehenden Ansprüche, **dadurch gekennzeichnet, dass** jede Rastnase (15) eine schräg von der Öffnung in der Vorderseite (16) der Berührungsschutzabdeckung (1) verlaufende Betätigungsfläche (19) aufweist, die einen Anschlag für das durch die Öffnung in der Vorderseite (16) zur Rastnase (15) herangeführte Werkzeug bildet und eine seitliche Verlagerung der Rastnase (15) durch das Werkzeug ermöglicht.

5. Berührungsschutzabdeckung (1) nach einem der vorangehenden Ansprüche, **dadurch gekennzeichnet, dass** die Berührungsschutzabdeckung (1) eine ebene Frontplatte (2) und einen die Frontplatte (2) seitlich umgebenden Rahmen (5) aufweist.

6. Berührungsschutzabdeckung (1) nach Anspruch 5, **dadurch gekennzeichnet, dass** der Rahmen (5) aus zwei Seitenzargen (3) und aus zwei Querzargen (4) besteht.

7. Berührungsschutzabdeckung (1) nach Anspruch 6, **dadurch gekennzeichnet, dass** die Seitenzargen (3) ein die Frontplatte (2) seitlich umgreifendes Profil aufweisen.

8. Berührungsschutzabdeckung (1) nach einem der Ansprüche 6 oder 7, **dadurch gekennzeichnet, dass** die Querzargen (4) schlitzartige Ausnehmungen (10, 11) zur Aufnahme von Endbereichen (12) der Frontplatte (2) und der Seitenzargen (3) aufweisen.

9. Berührungsschutzabdeckung (1) nach einem der Ansprüche 6 bis 8, **dadurch gekennzeichnet, dass** gegenüber liegende Endbereiche (12) der Frontplatte (2) jeweils formschlüssig in einer zugeordneten Querzarge (3) festlegbar sind.

10. Berührungsschutzabdeckung (1) nach Anspruch 9, **dadurch gekennzeichnet, dass** die Querzargen (4) Rastmittel (14) aufweisen, die zur Festlegung der Frontplatte (2) mit einer Ausnehmung (22) in der Frontplatte (2) in Eingriff treten.
